# FASCICULE DE BREVET EUROPEEN

(11) **EP 0 552 117 B1**
(45) Date de publication et mention de la délivrance du brevet: **03.05.1995**
(21) Numéro de dépôt: 93420014.8
(22) Date de dépôt: 13.01.1993
(51) Int. Cl.: F16L 3/22, H02G 3/06

(54) **Combinaison de tronçons successifs de chèmin de câbles en matière plastique et de moyens d'assemblage desdits tronçons, et procédé pour la mise en oeuvre de cette combinaison**
Kombination von aufeinanderfolgenden Kabelwegabschnitten aus Kunststoff und Vorrichtung zum Zusammensetzen der Abschnitte; Verfahren zur Erzeugung dieser Kombination
Combination of successive plastic cable channel sections and device for assembling such sections and method thereof

(30) Priorité: 14.01.1992 FR 9200515
(43) Date de publication de la demande: 21.07.1993
(73) Titulaire: MAVIL, F-21430 Liernais (FR)
(72) Inventeur: Simon, Bernard, F-69300 Caluire (FR)
(74) Mandataire: Karmin, Roger

(56) Documents cités:
- CH-A- 472 129
- GB-A- 1 374 928
- US-A- 4 589 449

## Description

Pour soutenir des câbles électriques ou autres canalisations par rapport à des murs ou des plafonds, on utilise des goulottes appelées chemins de câbles réalisées par des tronçons successifs réunis par des moyens d'assemblage. Comme le montrent, par exemple, les documents GB-A-1 374 928 et CH-A-472 129, les tronçons considérés peuvent être réalisés en matière plastique au moyen de profilés présentant une section transversale en forme de U dont les arêtes libres des ailes comportent un rebord parallèle au fond et orienté vers l'intérieur. La liaison des tronçons successifs est réalisée généralement au moyen d'éclisses boulonnées, ce qui nécessite le perçage de trous dans les tronçons. En effet, ceux-ci étant réalisés par extrusion, il n'est pas possible de prévoir des trous dans leurs parois au moment de la fabrication.

On comprend qu'ainsi les opérations de fixation des tronçons successifs bout-à-bout est longue et coûteuse.

Le document US-A-4 589 449 propose quant à lui de réaliser cette fixation par encliquetage d'une éclisse venant recouvrir une partie de deux tronçons successifs.

Les perfectionnements qui font l'objet de la présente invention visent à remédier à ces inconvénients et à permettre la réalisation simple et rapide de la liaison des différents tronçons successifs d'un chemin de câbles en matière plastique. Cet objet est atteint grâce à la combinaison selon la revendication 1 et son procédé de réalisation selon la revendication 6.

De manière usuelle, il est souvent prévu de fermer le côté ouvert des tronçons au moyen d'un couvercle qui coiffe ce côté et s'encliquète par rapport aux arêtes libres des rebords des ailes des tronçons.

Selon une forme de réalisation préférentielle de l'invention, un tel couvercle comporte des bords latéraux venant s'engager élastiquement sous la facette supérieure de la rainure centrale longitudinale des ailes des tronçons.

Avantageusement, le bas de chaque aile des tronçons est muni d'une protubérance longitudinale dont l'arête libre se trouve dans le plan de la paroi inférieure du fond de ces tronçons.

Lorsqu'on désire améliorer l'assemblage du couvercle et des tronçons, on utilise des étriers élastiques dont les branches s'accrochent au dessus du couvercle et aux protubérances du fond du tronçon.

Le dessin annexé, donné à titre d'exemple, permettra de mieux comprendre l'invention, les caractéristiques qu'elle présente et les avantages qu'elle est susceptible de procurer :
Fig. 1 est une vue en perspective éclatée des différents éléments constituant une combinaison suivant l'invention.
Fig. 2 à 4 sont des coupes transversales suivant un plan passant par la jonction de deux tronçons successifs de chemin de câbles et illustrant la mise en place d'une éclisse reliant ces deux tronçons.
Fig. 5 est une vue en perspective montrant l'assemblage de deux tronçons successifs et des éclisses qui les réunissent.
Fig. 6 est une vue semblable à celle de fig. 5, mais montrant les tronçons de chemin de câbles avec des couvercles et des étriers de maintien de ceux-ci.
Fig. 7 est une coupe transversale de la combinaison illustrée en fig. 6 et suivant le plan VII-VII passant par la jonction de deux tronçons successifs.

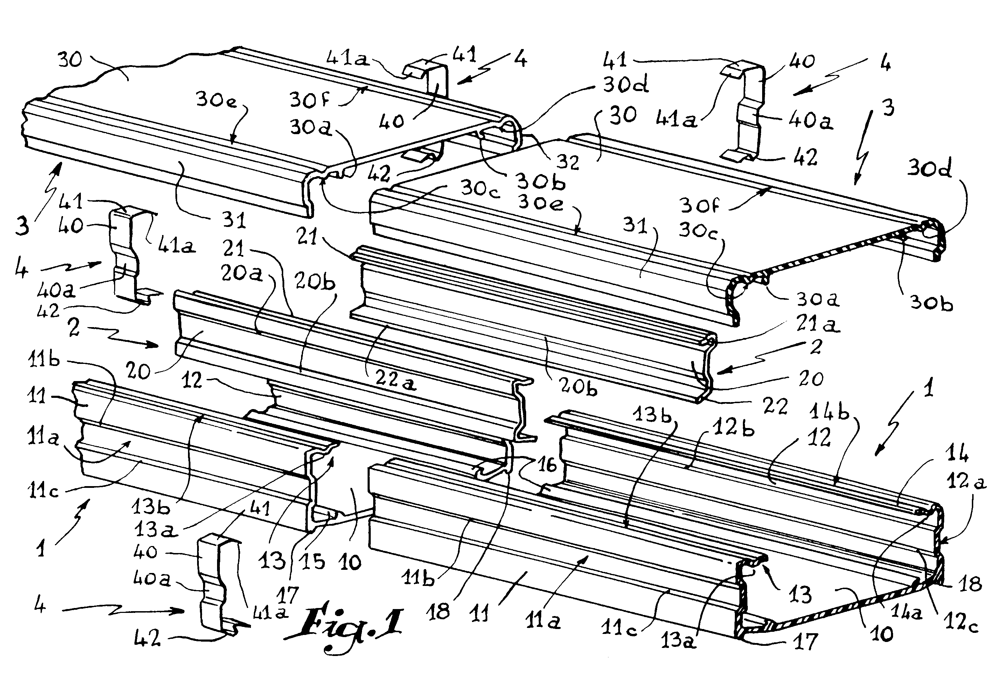

On a représenté en fig. 1 deux tronçons 1 de chemin de câbles destinés à être placés bout-à-bout et réunis au moyen de deux éclisses identiques 2 placées en vis-à-vis de part et d'autres des extrémités aboutées des deux tronçons 1.

Chaque tronçon 1 est réalisé par extrusion d'une matière plastique appropriée et présente en section transversale en gros la forme d'un U.

Ainsi, chaque tronçon 1 comporte un fond 10 et deux ailes 11 et 12 dont les extrémités libres comportent un rebord 13, 14 parallèle au fond 10 et orienté vers l'intérieur, c'est-à-dire en direction l'un de l'autre.

On observe que le fond 10 est pourvu de deux joncs 15, 16 longitudinaux et parallèles à la base de chaque aile 11, 12. Chaque jonc comporte un redent 15a, 16a orienté en direction de l'aile correspondante 11, 12 respectivement.

On observe que la partie du fond comprise entre les joncs 15, 16 et les ailes correspondantes est oblique, c'est-à-dire qu'elle est ascendante en direction de l'aile correspondante.

Chaque aile 11, 12 comporte une rainure centrale longitudinale 11a, 12a dont le fond est déporté en direction de l'intérieur par rapport au plan général de l'aile considérée, afin de constituer deux facettes obliques 11b, 11c - 12b, 12c.

Le rebord 13, 14 de chaque aile est muni d'une nervure longitudinale intérieure (13a, 14a qui forme sur le dessus des rebords une creusure 13b, 14b.

Chaque éclisse, qui affecte aussi la forme générale d'un U, présente une largeur égale à la hauteur intérieure des ailes 11, 12 de chaque tronçon 1. Le fond 20 de l'éclisse est déporté vers l'intérieur de manière que sa paroi externe forme deux faces obliques tournées l'une vers l'autre et référencées 20a et 20b. La distance entre ces faces obliques extérieures est identique à celle qui sépare les facettes internes 11b 11c et 12b et 12c des ailes. La première aile 21 de chaque éclisse 2 est cambrée vers l'intérieur de telle manière qu'elle constitue avec la base de cette aile un épaulement 21a. La hauteur de la seconde aile 22 de chaque éclisse est égale à la distance séparant chaque redent 15a, 16a de la base de l'aile correspondante des tronçons.

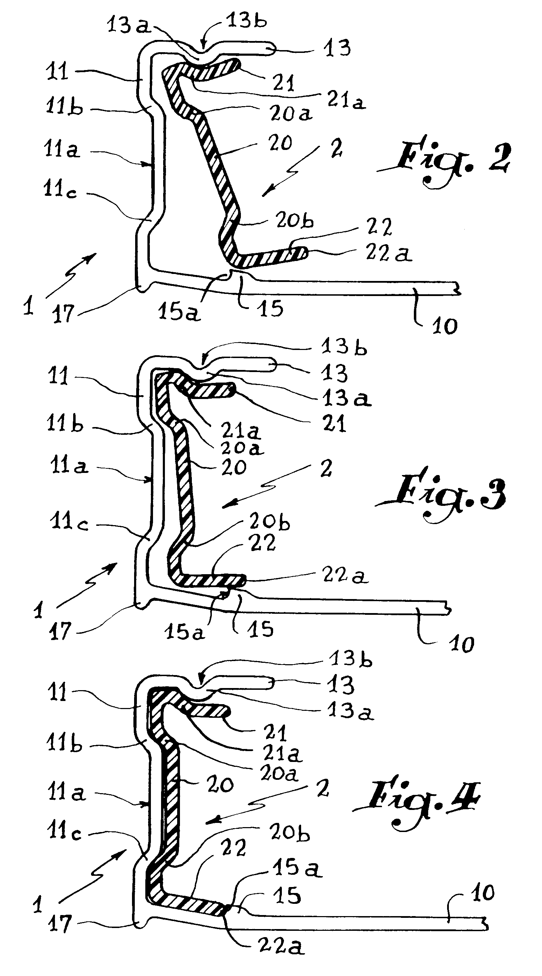

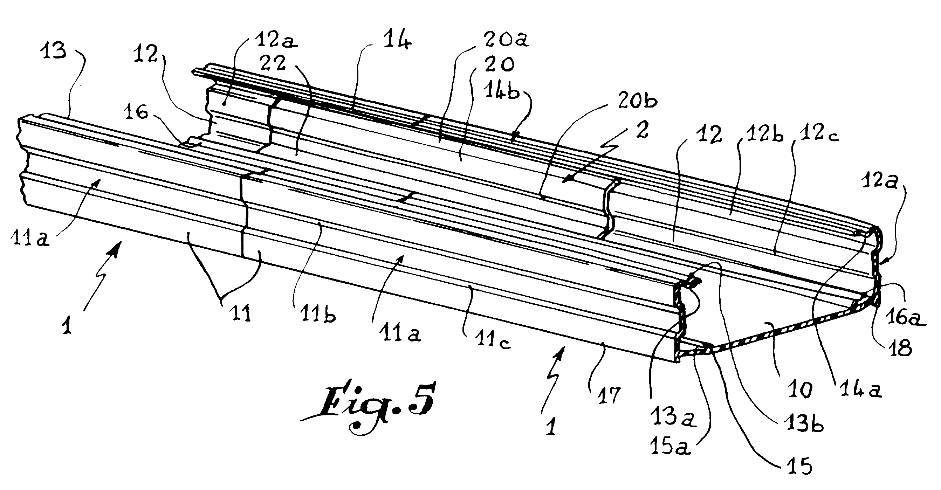

La mise en place de chaque éclisse s'effectue, comme illustré en fig. 2, en engageant obliquement cette éclisse, de manière que l'épaulement 21a vienne en contact avec la nervure correspondante 13a ou 14a des rebords 13 ou 14 des ailes des deux tronçons mis bout-à-bout. En faisant pivoter ensuite l'éclisse autour de la nervure considérée, on amène son fond en appui contre les ailes correspondantes du profilé, si bien que les faces obliques 20a, 20b de l'éclisse viennent coopérer avec les deux facettes 11b, 11c - 12b, 12c (fig. 4). La dernière opération consiste à déformer légèrement la seconde aile 22 de l'éclisse de manière que son arête libre 22a vienne s'enclencher sous le redent correspondant 15a, 16a (fig. 4) afin que l'éclisse soit verrouillée en position en vue de relier rigidement deux tronçons 1 mis bout-à-bout.

A la fin de la réalisation de cette liaison, les deux tronçons considérés se trouvent assemblés comme illustré en fig. 5.

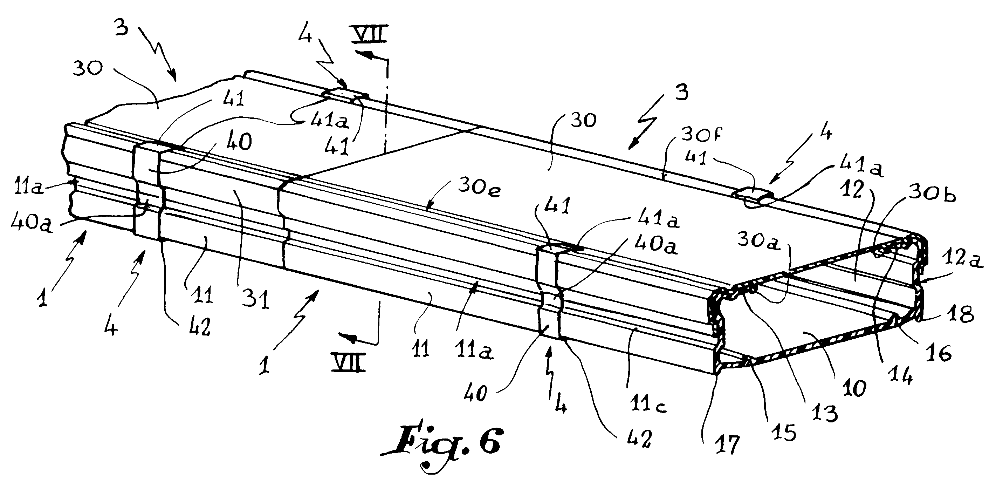

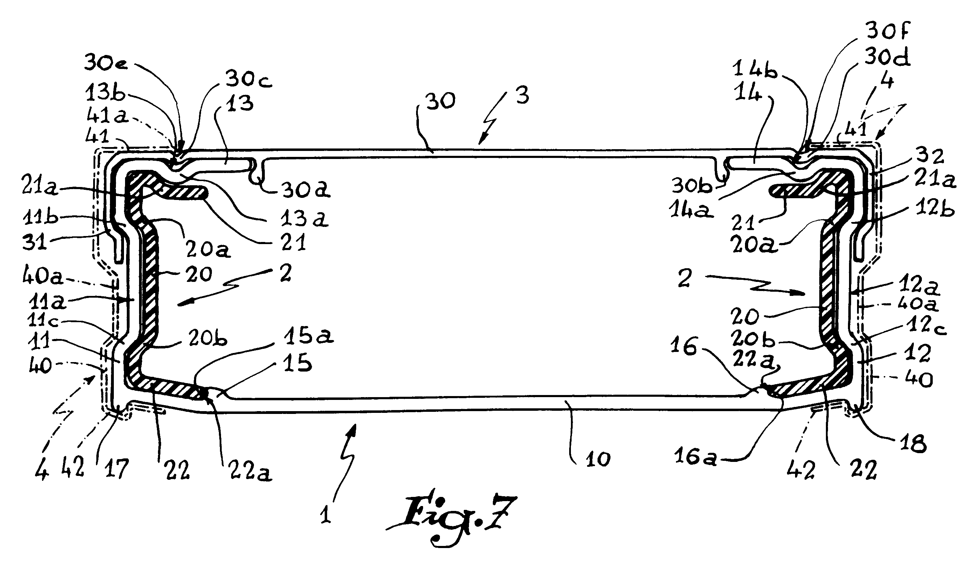

On a montré en fig. 6 et 7 la manière dont un couvercle peut être associé aux tronçons 1 successifs. Ce couvercle référencé 3 comporte un fond 30 dont la face intérieure comprend deux cordons longitudinaux 30a, 30b qui viennent à la manière usuel le s'encliqueter par rapport aux arêtes libres des rebords 13, 14 des tronçons 1. On observe que le fond 30 est encore muni de deux saillies longitudinales ménagées sur sa face interne et référencée 30c, 30d qui viennent se loger dans les creusures 13b, 14b desdits rebords. On note que ces saillies déterminent au-dessus d'elles deux sillons 30e, 30f dont le rôle sera mieux expliqué plus loin.

Le couvercle 3 comporte encore deux bords latéraux 31, 32 qui sont prévus déportés vers l'intérieur de manière à venir s'encliqueter par rapport à la nervure longitudinale 11a, 12a des ailes du tronçon 1. Le couvercle 3 étant réalisé en une matière plastique rigide, il se trouve maintenu parfaitement par rapport au tronçon 1.

Si toutefois on désire une sécurité supplémentaire, on peut utiliser des étriers élastiques 4 comportant un voile central 40 déporté vers l'intérieur en 40a et deux branches extrêmes 41, 42. La branche 41 comprend un crochet d'extrémité 41a susceptible de venir s'engager dans le sillon 30e, 30f du couvercle, tandis que sa branche inférieure 42 est recourbée afin de venir chevaucher élastiquement une protubérance longitudinale 17, 18 ménagée au bas de chaque aile et dont l'arête libre se trouve dans le plan du fond 10.

## Revendications

1. Combinaison de tronçons successifs de chemin de câbles réalisés chacun au moyen d'un profilé en matière plastique présentant en section transversale la forme d'un U dont les arêtes libres des ailes (11, 12) comportent un rebord (13, 14) parallèle au fond et orienté vers l'intérieur et de moyens d'assemblage desdits tronçons, caractérisée en ce que le fond (10) de chaque tronçon (1) est pourvu de deux joncs (15, 16) disposés parallèlement à la base de chaque aile (11, 12), chaque jonc (15, 16) comportant un redent (15a, 16a) orienté en direction de l'aile correspondante, en ce que la partie du fond comprise entre les joncs (15, 16) et les ailes (11, 12) est oblique, en ce que chaque aile (11, 12) comprend une rainure centrale longitudinale (11a, 12a) constituant sur l'intérieur de l'aile deux facettes obliques (11b, 11c - 12b, 12c), en ce que le rebord (13, 14) des ailes est muni d'une nervure longitudinale intérieure (13a, 14a) et en ce que les moyens d'assemblage sont constitués par deux éclisses (2) à section transversale en U dont le fond, qui présente une largeur égale à la hauteur des ailes des tronçons, est déporté vers l'intérieur pour former deux faces obliques extérieures (20a, 20b) complémentaires des facettes (11b, 11c - 12b, 12c) des tronçons (1), tandis que la première (21) de ses ailes est cambrée vers l'intérieur pour former un épaulement (21a) qui vient en appui contre la nervure (13a, 14a) du rebord (13, 14) desdits tronçons, la seconde aile (22) de l'éclisse comportant une hauteur égale à la distance séparant chaque redent (15a, 16a) et l'aile correspondante (11, 12) des tronçons (1).

2. Combinaison suivant la revendication 1, comprenant un couvercle (3) coiffant la partie supérieure de chaque troncon (1) et s'encliquetant par rapport aux arêtes libres des rebords (13, 14) des tronçons, caractérisée en ce que le couvercle comporte des bords latéraux (31, 32) venant s'engager élastiquement par rapport à la rainure centrale longitudinale (11a, 12a) des ailes (11, 12) de chaque tronçon (1).

3. Combinaison suivant la revendication 2, caractérisée en ce que le couvercle (3) comporte deux saillies longitudinales (30c, 30d) qui s'engagent dans des creusures (13b, 14b) des rebords (13, 14) de chaque troncon (1), lesquelles correspondent aux nervures longitudinales intérieures (13a, 14a) des rebords (13, 14).

4. Combinaison suivant la revendication 2, caractérisée en ce que le bas de chaque aile des tronçons (1) est muni d'une protubérance (17, 18) dont l'arête libre se trouve dans le plan de la paroi inférieure centrale du fond (10).

5. Combinaison suivant les revendications 3 et 4, caractérisée en ce qu'elle comprend en outre des étriers élastiques (4) de maintien du couvercle (3) et dont les branches qui affectent la forme de crochets (41a, 42) viennent s'engager élastiquement d'une part dans des sillons (30e, 30f) correspondant aux saillies (30c, 30d) du couvercle (3) et d'autre part par rapport aux protubérances (17, 18) des tronçons.

6. Procédé de réalisation de la combinaison suivant la revendication 1, caractérisé en ce qu'il consiste à placer au moins deux tronçons (1) de chemin de câbles bout-à-bout, à engager une première éclisse (2) obliquement afin que sa première aile (21) soit en contact avec le rebord (13) des deux tronçons, l'épaulement (21a) de ladite aile étant en prise avec la nervure intérieure (13a) du rebord (13) de ces tronçons, puis à faire pivoter l'éclisse (2) en la déformant élastiquement afin que son fond vienne en appui contre l'aile correspondante des tronçons tandis que le bord libre (22a) de la seconde aile (22) de l'éclisse (2) vient en butée contre le redent (15a) du fond (10) des tronçons (1) et enfin à mettre en place de la même manière une seconde éclisse en face de la première.

## Claims

1. A combination of successive segments of cable track, each constituted as a former of plastic material presenting in transverse section the form of a U of which the free edges of the arms (11,12) carry a rim (13,14) parallel to the base and oriented towards the interior, and of means for assembling the said segments, characterised in that the bottom (10) of each segment (1) is provided with two ridges (15,16) disposed parallel to the base of each arm (11,12), each ridge (15,16) comprising a groove (15a,16a) oriented in the direction of the corresponding arm; in that the part of the base contained between the ridges (15,16) and the arm (11,12) is oblique; in that each arm (11,12) includes a central longitudinal channel (11a,12a) constituting on the inside of the arm two oblique facets (11b,11c-12b,12c); in that the rib (13,14) of the arm is provided with a longitudinal interior rib (13a,14a); and in that the means for assembly are constituted by two clips of transverse section a U of which the base, which presents a width equal to the height of the arms of the segments, is displaced towards the interior in order to form two external oblique faces (20a,20b) complementary to the facets (11b,11c-12b,12c) of the segments (1), whereas the first (21) of its arms is bent towards the inside in order to form a shoulder (21a) which comes into contact with the rib (13a,14a) of the rim (13,14) of the said segments, the second arm (22) of the clip having a height equal to the distance separating each groove (15a, 16a) and the corresponding arm (11,12) of the segments (1).

2. Combination according to claim 1, comprising a cover (3) covering the upper part of each segment (1) and fitting for connection to the free edges of the rims (13,14) of the segments, characterised in that the cover comprises lateral margins (31,32) which elastically engage for connection with the central longitudinal channel (11a,12a) of the arms of each segment (1).

3. Combination according to claim 2, characterised in that the cover (3) comprises two longitudinal protrusions (30c, 30d) which engage in hollows (13b,14b) of the rims (13,14) of each segment (1), which correspond to the interior longitudinal ribs (13a,14a) of the rims.

4. Combination according to claim 2, characterised in that the base of each arm of the segments (1) is provided with a protuberance (17,18) of which the free edge is disposed in the plane of the lower central wall of the bottom (10).

5. Combination according to claims 3 and 4, characterised in that it comprises also elastic stirrups (4) for support of the cover (3), and of which the branches that assume the form of hooks (41a,42) come into elastic engagement on one side in grooves (30e,30f), corresponding to the protrusions (30c,30d), in the cover (3) and on the other side for connection with the protuberances (17,18) of the segments.

6. A method of making the combination according to claim 1, characterised in that it consists of placing at least two segments (1) of the cable track end to end, engaging a first clip (2) obliquely such that its first arm (21) is in contact with the rim (13) of two segments, the shoulder (21a) of the said arm being in contact with the interior rib (13a) of the rim (13) of these segments, then causing the clip (2) to pivot while deforming it elastically such that its bottom comes into connection with the corresponding arm of the segments whilst the free margin (22a) of the second arm (22) of the clip (2) comes into abutment against the groove (15a) of the bottom (10) of the segments (1) and finally putting in place in the same manner a second clip opposite the first.

## Patentansprüche

1. Kombination von aufeinanderfolgenden Kabelwegabschnitten, die jeweils aus einem im Querschnitt U-förmigen Kunststoffprofil hergestellt sind, dessen freie Kanten dar Schenkel (11,12) einen parallel zum Boden liegenden, und nach innen gerichteten umgebogenen Rand (13,14) aufweisen und von Mitteln zum Zusammensetzen der Abschnitte,
**dadurch gekennzeichnet,**
daß der Boden (10) jedes Abschnittes (1) mit zwei Vorsprüngen (15,16) versehen ist, die parallel an der Basis jedes Schenkels (11,12) angeordnet sind, wobei jeder Schenkel (15,16) einen hakenförmigen Vorsprung (15a,16a) umfaßt, der zu dem entsprechenden Schenkel gerichtet ist,
daß der zwischen den Vorsprüngen (15,16) und den Schenkeln (11,12) eingeschlossene Bereich des Bodens schräg ist,
daß jeder Schenkel (11,12) eine mittlere Längsrinne (11a,12a) umfaßt, die auf der Innenseite des Schenkels zwei schräge Facetten (11b,11c -12b, 12c) bilden,
daß der Rand (13,14) der Schenkel mit einer inneren Längsrippe (13a,14a) versehen ist und daß die Mittel zum Zusammensetzen durch zwei Laschen (2) mit U-förmigem Querschnitt gebildet werden, deren Boden, der eine Breite gleich der Höhe der Schenkel der Abschnitte aufweist, nach innen versetzt ist, um zwei äußere schräge, komplementär zu den Facetten (11b,11c - 12b,12c) der Abschnitte (1) liegende Flächen (20a,20b) zu bilden, während die erste (21) ihrer Schenkel nach innen eingedrückt ist, um eine Schulter (21a) zu bilden, die sich gegen die Rippe (13a,14a) des Randes (13,14) der Abschnitte abstützt, und der zweite Schenkel (22) der Lasche eine Höhe gleich dem Abstand zwischen jedem hakenförmigen Vorsprung (15a,16a) und dem entsprechenden Schenkel (11,12) der Abschnitte aufweist.

2. Kombination nach Anspruch 1 mit einem Deckel (3), der den oberen Teil jedes Abschnittes (1) überdeckt und in bezug auf die freien Kanten der umgebogenen Ränder (13,14) der Abschnitte einrastet, dadurch gekennzeichnet, daß der Deckel Seitenränder (31,32) aufweist, die elastisch mit der mittleren Längsrinne (11a,12a) der Schenkel (11,12) jedes Abschnittes (1) in Eingriff treten.

3. Kombination nach Anspruch 2, dadurch gekennzeichnet, daß der Deckel (3) zwei Längsvorsprünge (30c,30d) aufweist, die in zwei Einsenkungen (13b,14b) der umgebogenen Ränder (13,14) jedes Abschnittes (1) eingreifen, die den inneren Längsrippen (13,14a) der Ränder entsprechen.

4. Kombination nach Anspruch 2, dadurch gekennzeichnet, daß die Unterseite jedes Schenkels der Abschnitte (1) mit einem Vorsprung (17,18) versehen ist, dessen freie Kante sich in der Ebene der unteren mittleren Wand des Bodens (10) befindet.

5. Kombination nach einem der Ansprüche 3 und 4, dadurch gekennzeichnet, daß sie außerdem elastische Haltebügel (4) für den Deckel (3) umfaßt, dessen Arme, denen die Form von Haken (41a,42) zugeordnet sind, elastisch einerseits in die Rillen (30e,30f) entsprechend den Vorsprüngen (30c,30d) des Deckels (3) und andererseits mit den Vorsprüngen (17,18) der Abschnitte in Eingriff treten.

6. Verfahren zur Herstellung der Kombination nach Anspruch 1, dadurch gekennzeichnet, daß mindestens zwei Kabelwegabschnitte (1) mit den Enden aneinanderstoßend angeordnet werden, daß eine erste Lasche (2) schräg so in Eingriff gebracht wird, daß ihr erster Schenkel (21) in Kontakt mit dem umgebogenen Rand (13) der zwei Abschnitte tritt, wobei die Schulter (21a) des Schenkels mit der inneren Rippe (13a) des Randes dieser Abschnitte in Eingriff ist, daß dann die Lasche unter elastischer Verformung geschwenkt wird, damit sich sein Boden gegen den entsprechenden Schenkel der Abschnitte abstützt, während der freie Rand (22a) des zweiten Schenkels (22) der Lasche (2) gegen den hakenförmigen Vorsprung (15a) des Bodens (10) der Abschnitte (1) stößt und daß eine zweite Lasche in der gleichen Weise gegenüberliegend zu der ersten in Stellung gebracht wird.
